# EUROPEAN PATENT SPECIFICATION

(11) **EP 2 451 644 B1**
(45) Date of publication and mention of the grant of the patent: **23.04.2014**
(21) Application number: 10778543.8
(22) Date of filing: 06.07.2010
(51) Int. Cl.: B32B 27/10, B32B 29/06, B32B 27/32

(54) **NON METAL-FOIL LAMINATED POUCH MATERIAL, METHOD FOR MANUFACTURING THE POUCH MATERIAL AND PACKAGING POUCH PRODUCED THEREOF**
MEHRLAGIGES METALLFOLIEN-FREIES BEUTELMATERIAL, VERFAHREN ZUR HERSTELLUNG DES BEUTELMATERIALS UND DARAUS HERGESTELLTER VERPACKUNGSBEUTEL
MATÉRIAU MULTICOUCHE SANS FEUILLE MÉTALLIQUE POUR SACHET, PROCÉDÉ DE FABRICATION DU MATÉRIAU POUR SACHET ET SACHET D'EMBALLAGE FABRIQUÉ À PARTIR DE CELUI-CI

(30) Priority: 08.07.2009 SE 0900949
(43) Date of publication of application: 16.05.2012
(73) Proprietor: Tetra Laval Holdings & Finance S.A., 1009 Pully (CH)
(72) Inventor: TOFT, Nils, S-224 72 Lund (SE); ALDÉN, Mats, S-266 95 Munka Ljungby (SE)
(74) Representative: Tetra Pak - Patent Attorneys SE
(86) International application number: PCT/EP2010/004067
(87) International publication number: WO 2011/003566

(56) References cited:
- WO-A1-01/17771
- US-A- 4 806 398

## Description

### TECHNICAL FIELD

The present invention relates to a non-foil laminated pouch material for packaging of liquid food or beverage. The invention also relates to a method for manufacturing of the packaging laminate and to a packaging container made from the packaging laminate.

### BACKGROUND OF THE INVENTION

Packaging containers of the single use disposable type for liquid foods are often produced from a packaging laminate based on paperboard or carton. One such commonly occurring packaging container is marketed under the trademark Tetra Brik Aseptic® and is principally employed for aseptic packaging of liquid foods such as milk, fruit juices etc, sold for long term ambient storage. The packaging material in this known packaging container is typically a laminate comprising a bulk core layer of paper or paperboard and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable adhesive polymers and/or polyolefins. Also on the outside of the core layer, there is an outermost heat sealable polymer layer.

The aluminium foil moreover renders the packaging material thermosealable by inductive thermosealing which is a rapid and efficient sealing technique for obtaining mechanically strong, liquid- and gas-tight sealing joints or seams during the production of the containers.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedic by fold formation along prepared crease lines in the packaging material, or packages in the shape of pillow-shaped pouches,.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean circumstances such that the filled package may be stored for a long time even at ambient temperature, without the risk of growth of micro-organisms in the filled product. Another important advantage of the continuous Tetra Brik® -type packaging method is, as stated above, the possibility of continuous high-speed packaging, which has considerable impact on cost efficiency.

A layer of an aluminium foil in the packaging laminate provides excellent gas barrier properties compared to most polymeric gas barrier materials. The conventional aluminium-foil based packaging laminate for liquid food aseptic packaging is the most cost-efficient packaging material, at its level of performance, available on the market today. Any other material to compete must be more cost-efficient regarding raw materials, have comparable food preserving properties and have a comparably low complexity in the converting into a finished packaging laminate.

There is now a growing trend towards developing such packaging materials having no aluminium-foil in the laminated structure, seeking to improve the environmental profile of the resulting material. It is then of course desirable to lower the costs for manufacturing of the packaging material and keeping the necessary properties for aseptic long-term storage of the package containers produced from the packaging laminate.

The pouch-shaped paper-based packaging containers of the Tetra Fino Aseptic ® type, are normally made from a packaging laminate with a considerably thinner paperboard, than the paperboard used in the more dimensionally stable brick-shaped packages. The thicker paperboard normally used in the brick-shaped packages provide a good level of light barrier properties to a finished packaging laminate. Consequently, the laminate for the pouch-type packages needs to be provided with light barrier properties by other means. Furthermore, the laminate naturally looses in mechanical strength, stiffness and grip-ability when the paper layer is thinner.

The requirements on oxygen gas barrier properties of the pouch-type packages are naturally a little less strict, than for the more dimensionally stable packages. Still, a certain level of barrier properties needs to be reached, despite the more flexible material creating cracks in the barrier layers. It is then desired to provide durable barrier layers that can compensate for the higher mechanical stress put on the packages.

One way of increasing the light barrier properties in a paper layer, may be to use paper qualities that are not bleached. The bleached paper is somehow affected in such a way that the light barrier properties are negatively influenced. Unbleached papers are, however, brown in colour and not particularly attracting the eye. Brown paper provides a printing surface that is bad for printing quality and moreover provides a cheap appearance to a packaging material.

### DISCLOSURE OF THE INVENTION

It is, therefore, a general object of the present invention to overcome or alleviate the above-described problems in producing a cost-efficient non-foil laminated pouch material packaging of liquid food or beverage, suitable for long-term, aseptic packaging of liquid or wet food.

It is a another object of the invention to provide a non-foil, laminated pouch material for packaging of liquid food or beverage into pouch packages, which has acceptable gas barrier properties and sufficient mechanical strength, after normal storage time.

It is a further object of the invention to provide a cost-efficient non-foil, laminated pouch material for packaging of liquid food or beverage, suitable for long-term, aseptic packaging of liquid or wet food, which packaging containers have good barrier properties not only against gas and water vapour, but also towards light and odour substances.

It is a still further object of the invention to provide a cost-efficient non-foil, laminated pouch material for packaging of liquid food or beverage, suitable for long-term, aseptic packaging of liquid or wet food, which may be heat sealable into liquid and gas tight packaging containers, by means of induction heat sealing.

These objects are thus attained according to the present invention by the laminated packaging material, the packaging container and the method of manufacturing the packaging material, as defined in the appended claims.

According to a first aspect of the invention, the general objects are attained by a non-foil laminated pouch material for packaging of liquid food or beverage, the packaging laminate laminated material comprising a first layer of paper, which first paper layer is situated towards the inner side of the laminated packaging material, and a second layer of paper situated towards the outer side of the laminated packaging material, the first and second paper layers being laminated to each other by means of at least on intermediate bonding layer, the packaging laminate further comprising a gas barrier coating layer, applied onto one or both sides of the first paper layer, a metal vapour deposition coating barrier layer applied onto or arranged on the inner side of the, thus optionally coated, first paper layer, the packaging laminate further comprising an innermost layer of liquid tight, heat sealable thermoplastic polymer material applied onto the inner side of the metal vapour deposition coating, and an outermost layer of liquid tight, heat sealable thermoplastic polymer material on the opposite side of the packaging laminate, applied on the outer side of the second paper layer.

By sandwiching two paper layers to each other by an intermediate thermoplastic layer, higher mechanical strength may be achieved, but also higher flexibility in how paper properties can be tailor-made towards the inside and outside of a packaging laminate.

In order to secure cost-efficiency of the packaging material, the gas barrier coating layer is preferably formed by a liquid film coating method, also often generally referred to as dispersion coating, of a liquid composition onto said first paper layer and subsequent drying, the liquid composition containing a polymer binder dispersed or dissolved in an aqueous or solvent medium.

According to one embodiment, the gas barrier coating layer is coated onto the inner side of the first paper layer and the metal vapour deposition coating barrier layer is subsequently deposited onto the inner side of the gas barrier coating. It seems that the metallised layer coated onto such a liquid film coated pre-coating layer has improved quality, i.e. homogeneity and eveness, and thereby improved barrier and durability properties.

In order to further improve the gas barrier properties of the coated first paper layer substrate, an additional gas barrier coating layer is coated on the outer side of the first paper layer.

According to a alternative embodiment, the metal vapour deposition coating barrier layer (15) has been deposited onto a polymer substrate film (16) comprising a heat sealable thermoplastic material, and the thus deposition coated film was subsequently laminated to the gas barrier coated first paper layer by means of an additional intermediate bonding layer (18). By this particular embodiment, the two barrier coatings in the packaging material are separated by an intermediate bonding layer, which increases the abuse resistance and robustness of the barrier material layers as a whole.

Preferably, the gas barrier coating layer is formed from a composition mainly comprising a polymer selected from the group consisting of polyvinyl alcohol (PVOH), water dispersible ethylene vinyl alcohol (EVOH), water dispersible polyamide (PA), acrylic or methacrylic acid polymers (PAA, PMAA) or ethylene (meth)acrylic co-polymers (E(M)AA), polyvinylidene chloride (PVDC), water dispersible polyesters, cellulose derivatives, polysaccharides, polysaccharide derivatives and combinations of two or more thereof.

According to one embodiment, the liquid composition additionally comprises inorganic particles in order to impart or further improve oxygen gas barrier properties of the liquid film coated barrier layer.

Where it is desirable to use a polymer that has a more cost-efficient and positive environmental profile, the barrier layer may be formed from a composition mainly comprising PVOH, water dispersible EVOH or starch, or combinations thereof. A water-dispersible EVOH has a higher amount of vinyl alcohol units compared to melt processable EVOH, and are more similar in nature to PVOH than to EVOH. Pure PVOH and starch-based polymers may be more or less biologically degradable, why such polymers may be more desirable for some packaging applications.

It is desired that the polymer binder itself has inherent gas barrier properties. Accordingly, the barrier coating layer may preferably be formed from a composition mainly comprising a polymer selected from the group consisting of PVOH, water dispersible EVOH, PVDC, water dispersible polyamide (PA), starch, starch derivatives, and combinations of two or more thereof.

In comparison with aluminium foil, PVOH as a liquid film coating barrier polymer enjoys many desirable properties, with the result that it is the most preferred barrier material in many contexts. Among these, mention might be made of the good film formation properties, compatibility with foods and economic value, together with its high oxygen gas barrier properties. In particular, PVOH provides a packaging laminate with high odour barrier properties, which is especially important for the packaging of milk.

Aqueous systems generally have certain environmental advantages. Preferably, the liquid gas barrier composition is water-based, because such compositions usually have a better work environment friendliness than solvent-based systems, as well.

In order to improve the water vapour and oxygen barrier properties of a PVOH coating, a polymer or compound with functional carboxylic acid groups may be included in the composition. Suitably, the polymer with functional carboxylic acid groups is selected from among ethylene acrylic acid copolymer (EAA) and ethylene methacrylic acid copolymers (EMAA) or mixtures thereof. One known such particularly preferred barrier layer mixture consists of PVOH, EAA and an inorganic laminar compound. The EAA copolymer is then included in the barrier layer in an amount of about 1-20 weight %, based on dry coating weight.

It is believed that the improved oxygen and water barrier properties result from an esterification reaction between the PVOH and the EAA at an increased drying temperature, whereby the PVOH is crosslinked by hydrophobic EAA polymer chains, which thereby are built into the structure of the PVOH. Such a mixture is, however, more expensive because of the cost of the additives. Furthermore, the compositions may be made more durable by drying and curing at elevated temperatures. Crosslinking can also be induced by the presence of polyvalent compounds, e.g. metal compounds such as metal-oxides, although such compounds are less preferred in the coating compositions for this purpose.

Special kinds of water-dispersible ethylene vinyl alcohol polymer (EVOH) have lately been developed and may be conceivable for an oxygen barrier liquid coating composition. Conventional EVOH polymers, however, are normally intended for extrusion and are not possible to disperse/dissolve in an aqueous medium in order to produce a thin liquid film coated barrier film of 5 g/m2 or below, preferably 3,5 g/m2 or below. It is believed that the EVOH should comprise a rather high amount of vinyl alcohol monomer units to be water-dispersible or dissolvable and that the properties should be as close to those of liquid film coating grades of PVOH as possible. An extruded EVOH layer is not an alternative to liquid film coated EVOH, because it inherently has less similar properties to PVOH than EVOH grades for liquid film coating, and because it cannot be applied at a cost-efficient amount below 5 g/m2 as a single layer by extrusion coating or extrusion lamination, i.e. it requires co-extruded tie layers, which are generally very expensive polymers. Furthermore, very thin extruded layers cool off too quickly and do not contain enough heat energy to sustain sufficient lamination bonding to the adjacent layers.

Other examples of polymer binders, suitable for liquid film coating, are the polysaccharides, in particular starch or starch derivatives, such as preferably oxidised starch, cationic starch and hydroxpropylated starch. Examples of such modified starches are hypochlorite oxidised potato starch (Raisamyl 306 from Raisio), hydroxypropylated corn starch (Cerestar 05773). However, also other starch forms and derivatives may be feasible liquid film coating binders.

Further examples of polymer binders are coatings comprising mixtures of carboxylic acid containing polymers, such as acrylic acid or methacrylic acid polymers, and polyalcoholic polymers, such as PVOH or starch. A cross-linking reaction of these polymer binders are preferred, as mentioned above, for resistance to high humidity.

Most preferably, however, the binder polymer is PVOH, because it has all the good properties mentioned above, i.e. in addition to good barrier properties, also good film formation properties, cost efficiency, food compatibility, odour barrier properties and, moreover, induction heat sealing durability.

A PVOH-based gas barrier composition performs best when the PVOH has a degree of saponification of at least 98 %, preferably at least 99 %, although also PVOH with lower degrees of saponification may provide good properties.

In order to further enhance the gas barrier properties, the liquid barrier composition further may comprise inorganic particles.

The polymer binder material may for example be mixed with an inorganic compound which is laminar in shape, or flake-formed. By the layered arrangement of the flake-shaped inorganic particles, an oxygen gas molecule has to migrate a longer way, via a tortuous path, through the oxygen barrier layer, compared to the normal straight path across a barrier layer.

According to one embodiment, the inorganic laminar compound is a so-called nanoparticle compound dispersed to an exfoliated state, i.e. the lamellae of the layered inorganic compound are separated from each other by means of a liquid medium. Thus the layered compound preferably may be swollen or cloven by the polymer dispersion or solution, which at dispersion has penetrated the layered structure of the inorganic material. It may also be swollen by a solvent before added to the polymer solution or polymer dispersion. Thus, the inorganic laminar compound is dispersed to a delaminated state in the liquid gas barrier composition and in the dried barrier layer. The term clay minerals includes minerals of the kaolinite, antigorite, smectite, vermiculite, bentonite or mica type, respectively. Specifically, laponite, kaolinite, dickite, nacrite, halloysite, antigorite, chrysotile, pyrophyllite, montmorillonite, hectorite, saponite, sauconite, sodium tetrasilicic mica, sodium taeniolite, commonmica, margarite, vermiculite, phlogopite, xanthophyllite and the like may be mentioned as suitable clay minerals. Preferred nano-particles are those of montmorillonite, most preferred purified montmorillonite or sodium-exchanged montmorillonite (Na-MMT). The nano-sized inorganic laminar compound or clay mineral preferably has an aspect ratio of 50-5000 and a particle size of up to about 5 µm in the exfoliated state.

Preferably, the inorganic particles mainly consist of such laminar bentonite particles having an aspect ratio of from 50 to 5000.

Suitably, the barrier layer includes from about 1 to about 40 weight %, more preferably from about 1 to about 30 weight % and most preferably from about 5 to about 20 weight %, of the inorganic laminar compound based on dry coating weight. If the amount is too low, the gas barrier properties of the coated and dried barrier layer will not be markedly improved compared to when no inorganic laminar compound is used. If the amount is too high, the liquid composition will become more difficult to apply as a coating and more difficult to handle in storage tanks and conduits of the applicator system. Preferably, the barrier layer includes from about 99 to about 60 weight %, more preferably from about 99 to about 70 weight % and most preferably from about 95 to about 80 weight % of the polymer based on the dry coating weight. An additive, such as a dispersion stabiliser or the like, may be included in the gas barrier composition, preferably in an amount of not more than about 1 weight % based on the dry coating.

According to a another embodiment, the inorganic particles mainly consist of laminar talcum particles having an aspect ratio of from 10 to 500. The composition normally comprises an amount of from 10 to 50 weight-%, more preferably from 20 to 40 weight-% of the talcum particles, based on dry weight. Below 20 weight-%, there is no significant increase in gas barrier properties, while above 50 weight-%, the coated layer may be more brittle and breakable because there is less internal cohesion between the particles in the layer. Above 50 weight %, the polymer binder seems to be in too low amount to surround and disperse the particles and laminate them to each other within the layer.

Alternatively, surprisingly good oxygen barrier properties may be achieved when there is made use of colloidal silica particles, exhibiting a particle size of 3-150 nm, preferably 4-100 nm and even more preferred 5-70 nm, which particles are preferably amorphous and spherical. The use of colloidal silica particles moreover has the advantage that the liquid barrier composition may be applied at a dry content of 15-40 weight %, preferably 20-35 weight % and even more preferred 24-31 weight %, whereby the demand on forcible drying is decreased.

Other alternatives of inorganic particles that may be used are particles of kaolin, mica, calcium carbonate etc.

The preferred polymer binder, also when employing inorganic particles for providing oxygen barrier properties, is PVOH, partly due to its advantageous properties mentioned above. In addition, PVOH is advantageous from a mixing point of view, i.e. it is generally easy to disperse or exfoliate inorganic particles in an aqueous solution of PVOH to form a stable mixture of PVOH and particles, thus enabling a good coated film with a homogeneous composition and morphology.

Suitably, the gas barrier coating layer is applied at a total amount of from 0,3 to 7 g/m², preferably from 0,5 to 5 g/m², more preferably 0,5 to 3 g/m², dry weight. Below 0,3 g/m², there will be a too low barrier effect. Moreover, there may be a risk of pinholes being formed, depending on paper or substrate characteristics, in connection with the removal of water or solvent for drying the applied barrier layer, if the applied layer is too thin. On the other hand, at above 5 g/m² in total, the coated layer will not bring cost-efficiency to the packaging laminate, due to high cost of polymers in general and due to high energy cost for evaporating the dispersion liquid.

Additionally, a recognisable level of oxygen barrier is achieved by PVOH at 0,5 g/m² and above, and a good balance between barrier properties and costs is achieved between 0,5 and 3,5 g/m².

According to one embodiment of the invention, the oxygen gas barrier layer is applied in two consecutive steps with intermediate drying, as two part-layers. If thus applied as two part-layers, each layer is suitably applied in amounts from 0,3 to 3,5 g/m², preferably from 0,5 to 2,5 g/m², and allows a higher quality total layer from a lower amount of liquid gas barrier composition. More preferably, the two part-layers are applied at an amount of from 0,5 to 2 g/m² each, preferably from 0,5 to 1,5 g/m² each.

The metal vapour deposition coating layer is applied by means of physical vapour deposition (PVD) onto the thin coated paper substrate. The thin metal vapour deposition coatings according to the invention are nanometer-thick, i.e. have a thickness that is most suitably counted in nanometers, for example of from 5 to 500 nm (50 to 5000 A), preferably from 5 to 200 nm, more preferably from 5 to 100 nm and most preferably from 5 to 50 nm.

Generally, below 5 nm the induction heat durable properties may be too low to be useful and above 200 nm, the coating may be less flexible and, thus, more prone to cracking when applied onto a flexible substrate.

Commonly, such a vapour deposition coating having induction heat durability is made of a metal compound, and preferably an induction heat sealing inducing metal vapour deposition coating layer is a layer substantially consisting of aluminium. Normally, an aluminium metallised layer inherently has a thin surface portion consisting of an aluminium oxide due to the nature of the metallisation coating process used.

Suitably, the metal vapour deposition coating layer has an optical density (OD) of from 1 to 5, preferably of from 1,5 to 3,5, more preferably from 2 to 3.

Preferably, the metal vapour deposition coating mainly comprises aluminium metal.

An aluminium-based thin vapour deposited layer preferably has a thickness of from 5 to 100 nm, more preferably from 5-50 nm, which corresponds to less than 1 % of the aluminium metal material present in an aluminium foil of conventional thickness, i.e. 6,3 µm.

Preferably, a step of surface treatment of the substrate film is carried out before vapour deposition coating, especially metallising, the substrate.

The most preferred metal according to the present invention is aluminium, although any other metal capable of being vacuum deposited into a homogeneous coating, may be used according to the invention. Thus, less preferred and less common metals such as Au, Ag, Cr, Zn, Ti or Cu are conceivable also. Generally, thin coatings of metal or a mixture of metal and metal oxide provide barrier properties against water vapour and are used also when the desired function is to prevent water vapour from migrating into and through the multilayer film or packaging laminate. Most commonly however, the metal in a metallisation coating is aluminium (Al).

In order to render a metal vapour deposition coating process cost-efficient, the substrate, i.e. the first, innermost situated, layer of paper or other cellulose-based material should be as thin as possible, so that as many meters as possible may be rolled onto a roll of coated paper. Preferably, the first paper layer has a surface weight of from 20 to 100 g / m2, preferably from 20 to 70 g/m2, more preferably from 20-60 g/m2. When the paper is too thin, it will naturally be more difficult to handle in subsequent coating and lamination processes. The thinner the paper can be, however, the more cost-efficient it can be in the metal vapour deposition coating process. On the other hand, a thicker first paper layer may contribute to a higher stiffness and grip-ability of the total packaging laminate structure, as well as to better light barrier properties.

In order to further provide the laminated material with sufficient stiffness and total thickness or grammage of paper bulk, the material further comprises a second, outermost situated, layer of paper or other cellulose-based material, which has a surface weight of from 20 to 100 g / m2, preferably from 20 to 70 g/m2, more preferably from 20-60 g/m2.

The conventional aluminium-foil based laminated material for manufacturing of pillow-shaped flexible pouch-type packages, has normally a single paper core layer, having a surface weight of from about 50 to about 140 g/m2, preferably from about 70 to about 120 g/m2, more preferably from 70 to about 110 g/m2. Aluminium foil, which also contributes with a certain amount of stiffness to the total stiffness of a laminated material, is not used in non-foil laminates, why the sandwich construction with two paper layers should be balanced to create the same level of total stiffness in a laminated material.

According to one embodiment, the first, inner, paper layer is an unbleached, cost-efficient paper while the second, outer, paper layer has a whiter appearance, due to bleaching or clay-coating, than the first paper layer, which outer paper layer is, therefore, better suited for printing of an outside décor layer. Such a specific paper layer combination, thus imparts a certain desired flexibility in the manufacturing of a laminated liquid packaging pouch material and in the choice of materials therefore. In some cases, it may be desired to have the more natural appearance of a more brownish coloured paper towards the outside, whereby an unbleached paper may be chosen also for the second, outer paper layer.

According to one cost-efficient and simple embodiment of the laminated material, the intermediate bonding layer is a layer of an extrusion laminated thermoplastic polymer.

According to another embodiment, the laminated material has been further provided with light barrier properties and stiffness by the intermediate bonding layer being a layer of a foamed, filled or cavitated thermoplastic polymer.

Suitable thermoplastics for the outermost and innermost heat sealable liquid-tight layers are based on polyolefins, such as for example polyethylenes or polypropylenes, preferably polyethylenes and more preferably low density polyethylenes such as, for example LDPE, linear LDPE (LLDPE) or single site catalyst metallocene polyethylenes (m-LLDPE) or blends of two or more thereof.

Alternative examples of polyolefins suitable for tie layers, extrusion lamination layers or even heat sealable layers are modified polyolefins based on LDPE or LLDPE co-polymers or, preferably, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or MAH-grafted polyethylene (MAH-g-PE). Another example of such modified polymers or adhesive polymers are so called ionomers or ionomer polymers. Preferably, the modified polyolefin is an ethylene acrylic acid copolymer (EAA) or an ethylene methacrylic acid copolymer (EMAA).

The vapour deposition coated first paper layer may be bonded to a second paper or paperboard layer by an intermediate polymer layer, preferably a thermoplastic polymer layer and more preferably a layer from a polymer selected from polyolefins and polyolefin-based co-polymers, often known as modified or adhesive polymers, especially LDPE or polyethylene-based polymers or co-polymers, or adhesive polymers, as described in the foregoing paragraph.

In order to further improve the light barrier of a packaging laminate according to the invention, if necessary, particles or pigments providing light barrier properties may be blended into one or more layers of the laminate. One example is light absorbing particles such as carbon black. The black colour of an intermediate layer is then advantageously hidden towards the outside by a paper or paperboard layer, and towards the inner side of the laminate, by a metallised, e.g. aluminium, layer. Another example is light-reflective particles such as titanium dioxide. Such particles may furthermore be adding to a whiter appearance of the packaging laminate.

For thinner low-cost segment packaging laminates, which have a thinner paper core layer, such light reflecting inorganic, white pigments may improve the light barrier properties of the packaging laminate as well as improving the appearance of the packaging material towards the outside.

According to one embodiment, a layer comprising carbon black pigments is coated onto the inner side of the first paper layer and is subsequently coated in turn by a metal vapour deposition coating barrier layer. In this manner, the black colour will become hidden towards the interior of the packaging container by the metal layer and towards the outside by the paper layers, and possibly further layers comprising white pigments.

For higher performance packaging laminates, e.g. requiring longer aseptic shelf life for more sensitive products, it is of course possible to add further barrier layers. One simple way of, for example, increasing further the oxygen barrier properties of the packaging laminate may be to use a thermoplastic bonding layer including a layer of melt-extrudable barrier layer, for the bonding of the metal vapour deposition coated inside first paper layer to a further, second layer of paper or paperboard. According to another, more preferred, embodiment, a thin layer of a barrier polymer layer may be co-extrusion coated together with optional tie layer(s) and the innermost heat sealable layer(s) onto the metal-coated inner side of the first paper layer. Such a co-extruded inside barrier layer would have to be kept thin, in order to easily transfer the induced heat through from the metal vapour deposition coating to the heat sealable layer.

In this way, the only thing to change in order to produce a higher performance packaging laminate, would be to include additional melt extrusion polymer layer(s) in the converting process at the lamination stage (e.g. a further barrier layer and possibly one or two melt co-extrusion tie layers).

Alternatively, an oxygen barrier coating layer may be coated onto the other, outer side of the first, innermost paper layer. Alternatively, or additionally, an oxygen barrier coating layer may be applied onto the inner side of the second, outer paper layer in the packaging laminate structure.

According to a further aspect of the invention, there is provided a packaging container manufactured from the non-foil packaging laminate of the invention. The packaging container is suitable for long-term, aseptic packaging of liquid or wet food, and has good package integrity with strong, durable seals, from induction heat sealing.

According to yet a further aspect of the invention, there is provided a method for manufacturing of the packaging laminate as defined in independent claim 15.

Thus, the method comprises the steps of providing a first layer of paper or other cellulose-based material, coating a gas barrier layer onto the inner side of the paper or cellulose-based material layer, vapour depositing a barrier metal layer onto the inner side of the thus barrier-coated paper layer, providing an innermost layer of a heat sealable thermoplastic polymer material, laminating the innermost layer to the inner side of the metal coated paper layer by extrusion coating, or by laminating the innermost layer to the paper layer in the form a pre-manufactured film, providing a second paper layer on the outside of the first paper layer, laminating the outer side of the first, coated, paper layer to the second paper layer, and at any stage of the method, providing an outermost layer of a heat sealable thermoplastic polymer material on the outermost, opposite side, of the packaging laminate.

According to an alternative embodiment of the invention, the barrier metal layer (15) is instead vapour deposited onto a polymer substrate film comprising an innermost layer (16) of heat sealable thermoplastic polymer material and the metal-deposited film is subsequently laminated to the inner side of the gas-barrier coated paper layer (11) by means of a further intermediate bonding layer (18).

In the preparation of the gas barrier layer coating, the method further comprises the steps of providing a liquid gas barrier composition containing a polymer binder dispersed or dissolved in an aqueous or solvent-based liquid medium, forming a thin gas barrier layer contiguous to the inner side of the first paper layer, comprising said polymer binder, by coating (22a) the liquid composition onto the inner side of said layer of paper and subsequent drying (22b) to evaporate the liquid.

Suitably, the polymer contained in the liquid composition is selected from a group consisting of polyvinyl alcohol (PVOH), water dispersible ethylene vinyl alcohol (EVOH), water dispersible polyamide (PA), acrylic or methacrylic acid polymers (PAA, PMAA) or ethylene (meth)acrylic co-polymers (E(M)AA), polyvinylidene chloride (PVDC), water dispersible polyesters, cellulose derivatives, polysaccharides, polysaccharide derivatives and combinations of two or more thereof.

In the case the polymer binder itself provides oxygen gas barrier properties, the polymer contained in the liquid composition is selected from a group consisting of polyvinyl alcohol (PVOH), water dispersible ethylene vinyl alcohol (EVOH), water dispersible polyamide (PA), polyvinylidene chloride (PVDC), starch, starch derivatives and combinations of two or more thereof.

If the gas barrier composition polymer binder is selected such that it has a significantly higher melting point than the innermost heat sealable layer, it may moreover function as an induction heat sealing durable layer, providing for a good metallisation substrate layer. Such induction heat sealing durable polymer binders are then selected from a group consisting of polyvinyl alcohol (PVOH), water dispersible ethylene vinyl alcohol (EVOH), water dispersible polyamide (PA), polyvinylidene chloride (PVDC), cellulose derivatives, polysaccharides, polysaccharide derivatives and combinations of two or more thereof.

An induction heat susceptible metal vapour deposition coating layer is sufficiently homogeneous and continuous in nature, to be able to transmit an electrical current as a result of an induced magnetic field, and to become heated such that an adjacent thermoplastic polymer layer will be heated and melted to provide melt sealing of said polymer. If the metal layer is discontinuous due to uneven coating or due to cracks, there will be no heating provided in the sealing area.

In order to reduce the amount of moisture released from the paper layer into the vacuum chamber during the metallisation process, the first paper layer, which is to be metal vapour deposition coated, may be coated also on the other, outer side by a liquid film composition of a polymer in aqueous or solvent based dispersion or solution, before the metallisation process step. It is desirable to avoid moisture in the vacuum chamber for metallisation, because it may reduce the speed at which the metallisation process can be carried out. Furthermore, any back transfer of paper dust in the subsequent handling of coated paper webs on reels may be prevented.

For food products requiring better barrier properties against oxygen gas, a gas barrier coating layer may also be coated onto the outer side of the first paper layer.

Alternatively, or additionally, a gas barrier coating layer may be coated also onto the inside of said second paper layer.

### EXAMPLES AND DETAILED DESCRIPTION

In the following, preferred embodiments of the invention will be described with reference to the drawings, of which:
Fig. 1 a, 1 b and 1 c are schematically showing, in cross-section, first, second and third embodiments of a laminated packaging material produced according to the invention,
Fig. 2 is showing a method of liquid film coating a substrate web,
Fig. 3 is showing a diagrammatic view of a plant for vapour deposition of a metal layer onto a substrate web,
Fig. 4 is showing a method of laminating together the laminated packaging materials in Fig. 1,
Fig. 5 is showing an example of a packaging container produced from the packaging laminate according to the invention,
Fig. 6 is showing the principle of how such packaging containers are manufactured from the packaging laminate in a continuous form, fill and seal process.

### EXAMPLE 1

Preparation of a barrier coating composition for the gas barrier layer: An aqueous dispersion of exfoliated laminar montmorillonite particles (Kunipia F from Kunimine Kogyo Co.) having an aspect ratio of about 50-5000, is blended with an aqueous solution of about 10 weight-% of PVOH (Mowiol 15-99, having a saponification degree of above 99 %) at 60-90 °C during 1-8 hours. The dispersion of exfoliated laminar mineral particles may be stabilised by means of a stabiliser additive. Alternatively, the laminar mineral particles are exfoliated directly in the PVOH-solution at 60-90 °C during 1-8 hours.

An aqueous composition of aqueous dissolved and dispersed PVOH and 30 weight-% exfoliated bentonite clay, was thus coated by means of liquid film coating, in two consecutive steps with drying in between, onto a thin paper web having a surface weight of 50 g/m2, with 3 g/m2 PVOH coating in total. The wet applied coating is dried by hot air to evaporate the water.

In a subsequent step, the PVOH-coated paper was coated with an aluminium metal coating by means of a vapour deposition process up to optical density 3, onto the PVOH layer.

The thus metallised, PVOH-coated paper was laminated to a second, outer paper layer, by means of laminating with an intermediate bonding layer of low density polyethylene (LDPE), and the resulting paper sandwich was finally extrusion coated with thermoplastic heat sealable layers (LDPE) on both sides. Alternatively, the paper sandwich may be laminated with a thermoplastic polymer film on the inside of the first paper layer, thus providing the innermost heat sealable layer in the form of a pre-manufactured film.

Packages produced from the resulting packaging material showed acceptable barrier properties for the purpose of pouch packaging of milk, in quick tests, and with the versatile configuration of the laminated material of the invention, there are ample further opportunities of improving barrier properties towards e.g. light, if needed.

The resulting laminated material was also tested for heat seal quality in a Tetra Brik Aseptic ® conventional filling machine, employing adapted induction heat sealing of the packaging containers produced. It has for example been seen that to reach sufficient heating efficiency by a very thin metallised layer, the frequency used in the induction sealing process needs to be increased significantly.

The appearance and characteristics of the seals of the thus filled and sealed packaging containers were studied, by tearing the seals apart again. The appearance was noted and compared between the samples. The seal width and evenness in alignment was determined and compared by a further test, in which all packaging material is dissolved around the seal, except for the heat sealed thermoplastics. Finally, the package integrity of a filled and sealed packaging container was tested by using the red ink test. These are all tests well know by dairies and filling sites for Tetra Brik Aseptic ® packages, for sealing quality control of the daily produced, filled packaging containers.

The weighed properties and qualities of the samples of sealed packaging containers were evaluated based on many years experience from quality control of conventional packaging laminates for Tetra Brik ®Aseptic packaging containers.

The heat seal quality and the integrity of the produced packages was very good, and on par with the seal quality of today's Tetra Brik Aseptic, aluminium foil based packages, according to evaluations by the test panel. In the red ink test, none of the tested filled and sealed packages, had any leakages related to the seal quality.

### COMPARATIVE EXAMPLE 1

A 12 um substrate film of an oriented PET (polyethylene terephthalate), was coated with an aluminium metal coating by means of a vapour deposition process to an optical density of about 3.

The thus metallised, PET-film was laminated to a thick paperboard having a bending force of 320 mN by means of an extrusion laminating thermoplastic bonding layer of low density polyethylene (LDPE), and the resulting laminate was subsequently coated with thermoplastic heat sealable layers (LDPE) on both sides and tested for heat seal quality in a Tetra Brik Aseptic ® conventional filling machine, employing adapted induction heat sealing of the packaging containers produced.

The heat seal quality and the integrity of the produced packages was acceptable according to evaluation by a test panel of tearing properties of the seals and of the package integrity using the red ink test, in comparison to the above examples. However, the sealing results from test run to test run were not as consistent and reliable as for laminated material with thin paper substrates.

Moreover, the oxygen barrier properties were determined insufficient for any aseptic, packaging for long-term storage purposes.

### COMPARATIVE EXAMPLE 2

A thin paper web having a surface weight of 50 g/m2 was co-extrusion coated by a first layer of LDPE at 10 g/m2 and a second layer of EAA (ethylene acrylic acid copolymer) at 5 g/m2.

In a subsequent step, the extrusion-coated paper was further coated with an aluminium metal coating by means of a vapour deposition process, onto the EAA layer.

The thus metallised, LDPE/EAA-coated paper was laminated with thermoplastic heat sealable layers on both sides and tested for heat seal quality in a test rig, simulating the real conditions in a conventional filling machine of the Tetra Brik Aseptic ® type, employing adapted induction heat sealing of the packaging containers produced. Furthermore, the laminated paper was tested in the conventional filling machine of the Tetra Brik Aseptic ® type, employing adapted induction heat sealing of the packaging containers produced.

The weighed properties and qualities of the samples of sealed packaging material and containers were evaluated based on many years experience from quality control of conventional packaging laminates for Tetra Brik ®Aseptic packaging containers, and it was seen that no properly sealed packages could be formed in the TBA filling machine, why any further testing of package integrity was unnecessary. Moreover, the results from the tear evaluation from sealing samples from the test rig showed that the seals were not good enough.

Thus, the heat seal quality and the integrity of the produced packages was not good, and not at all on par with the seal quality of today's Tetra Brik Aseptic, aluminium foil based packages, according to evaluations by the same test panel.

Moreover, without any layer providing gas barrier properties in addition to the metal vapour deposition coating, the gas barrier properties will be too low for aseptic, packaging for long-term storage purposes.

### EXAMPLE 2 (Reference Example)

Thin paper webs of different surface weights were coated by means of liquid film coating in two consecutive steps, with drying in between, with an aqueous composition of aqueous dissolved and dispersed PVOH, having a saponification degree of above 99 %, and 10 weight-% exfoliated bentonite clay, as set out in Table 1. The wet applied coatings were dried by hot air to evaporate the water.

In a subsequent step, the PVOH-coated paper webs were coated with an aluminium metal coating by means of a vapour deposition process, onto the PVOH layer.

The thus metallised, PVOH-coated papers were laminated with thermoplastic heat sealable layers on both sides and tested for heat seal quality in a test rig, simulating the real conditions in a conventional filling machine of the Tetra Brik Aseptic ® type, employing adapted induction heat sealing of the packaging containers produced.

The results are shown in Table 1, as a ranking list of the various tested samples of thin-paper based packaging materials. The evaluation was made by a test panel for evaluation of seal quality. From the results it can be seen that a thicker paper provides for better sealing results, than a thinner paper. It can also be seen that metal vapour deposition coating of a higher optical density (OD) provides for a somewhat better sealing result than a metal vapour deposition coating of a lower OD. Furthermore, it can be seen that thicker layers of PVOH provides for somewhat better sealing results than thinner layers. All the samples from Table 1, provided very good seal quality in the rig tests, and should provide equally good results of package integrity in filling machine tests, similarly to what was shown in Example 1.

**TABLE 1**

| Sample No | Paper g/ m2 | PVOH g/m2 | OD | Ranking |
|---|---|---|---|---|
| 1 | 50 | 2 x 0,7 | 3 | 6 |
| 2 | 50 | 2 x 1,5 | 1,5 | 5 |
| 3 | 50 | 2 x 1,5 | 3 | 4 |
| 4 | 70 | 2 x 1,5 | 3 | 1 |
| 5 | 70 | 2 x 0,7 | 1,5 | 3 |
| 6 | 70 | 2 x 0,7 | 3 | 2 |

There are of course still possibilities to further increase the gas barrier properties a little by coating thicker or further layers of the PVOH composition, or to fill the PVOH layer with higher amount of inorganic particles. There is, however, a more significant gain in odour barrier properties, by coating a thicker and more densely filled gas barrier layer composition. An excellent example of such a barrier composition comprises PVOH and from 10 to 50, preferably from 20 to 40 weight-% of talcum particles.

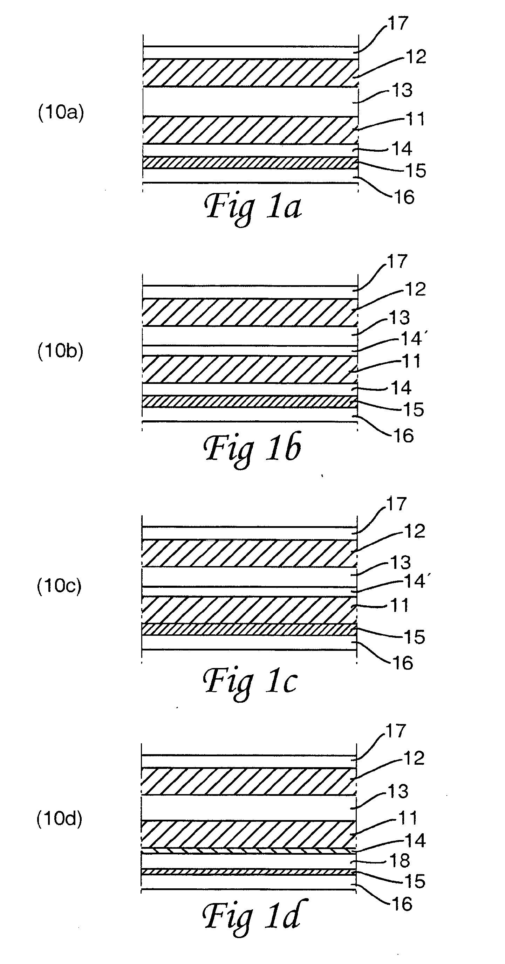

In Fig. 1a, there is shown, in cross-section, a first embodiment of a packaging laminate 10a for aseptic packaging and long-term storage under ambient conditions, produced according to the invention.

The laminate comprises a first paper layer 11, having a surface weight of about 50 g /m2, laminated to a second paper layer 12, having a surface weight of about 50 g/m2 by an intermediate bonding layer 13, suitably a low density polyethylene such as a normal grade of LDPE, a starch layer or a layer of polyvinylacetate (PVAc).

The intermediate bonding layer 13 is preferably formed by means of extrusion laminating the metal-coated first paper layer and the second paperboard layer to each other.

A thin barrier layer 14 is formed by liquid film coating of an aqueous polymer composition, and subsequent drying, onto the inner side of the paper layer 11. The composition comprises an aqueous solution of PVOH and 10 weight-% bentonite, and after drying, the coated layer thus comprises PVOH and exfoliated bentonite particles homogeneously distributed in a laminar fashion within the PVOH layer. Preferably, the PVOH has a saponification degree of at least 99 %.

The coated thin paper web is subsequently vapour deposition metallised on its coated side to an optical density (OD) of about 3. The resulting packaging laminate thus comprises a thin paper substrate 11, first coated with a barrier layer 14 of PVOH with bentonite at a dry grammage of about 3 g/m2, and then with a thin vapour deposition coating layer 15 of aluminium metal at a thickness of about 50 nm.

An outer liquid tight and heat sealable layer 17 of polyolefin is applied on the outside of the second paper layer 12, which side is to be directed towards the outside of a packaging container produced from the packaging laminate. The polyolefin of the outer layer 17 may be a conventional low density polyethylene (LDPE) of a heat sealable quality. An innermost liquid tight and heat sealable layer 16 is arranged on the inside of the vapour deposited layer 15, which is to be directed towards the inside of a packaging container produced from the packaging laminate, and the layer 16 will be in contact with the packaged product. The innermost heat sealable layer comprises a polymer based on low density polyethylene, preferably including also an LLDPE produced by polymerising an ethylene monomer with a C4-C8, more preferably a C6-C8, alpha-olefin alkylene monomer in the presence of a metallocene catalyst, i.e. a so called metallocene -LLDPE (m-LLDPE). The innermost heat sealable layer 16 may consist of two or several part-layers of the same or different kinds of extrusion-coatable polymers and may alternatively constitute a pre-manufactured and subsequently laminated polymer film 16.

According to a preferred embodiment of the invention, the innermost heat sealable layer 16 is bonded to the metal vapour deposition layer by means of a tie layer, preferably of an ethylene acrylic acid copolymer. Alternatively, other tie layers may be used. Alternative examples of polyolefins suitable as tie layers, for bonding the heat sealable innermost layer to the metal-coated paper layer, are modified polyolefins based on LDPE or LLDPE co-polymers or, preferably, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or MAH-grafted polyethylene (MAH-g-PE). Another example of such modified polymers or adhesive polymers are so called ionomers or ionomer polymers. Preferably, the modified polyolefin is an ethylene acrylic acid copolymer (EAA) or an ethylene methacrylic acid copolymer (EMAA).

In special cases, where a thicker heat sealable layer is needed, it is of course possible, although not preferred from a cost perspective, to apply a further heat sealable polyethylene layer onto the inside of the innermost layer 16.

In Fig. 1 b, there is shown, in cross-section, a second embodiment of a packaging laminate 10b for aseptic packaging and long-term storage under ambient conditions, produced according to the invention.

The packaging laminate is essentially configured in the same way as the laminate of Fig. 1a, except for having an additional gas barrier layer 14', which comprises PVOH with or without exfoliated bentonite particles homogeneously distributed in a laminar fashion within the PVOH layer, coated also onto the outer side of the first, paper layer 11. The additional gas barrier properties may be needed for the more sensitive liquid food products or beverage, which need to retain freshness during a long period of storage time.

Alternatively, or even in addition, a gas barrier layer from a liquid film coated PVOH composition with bentonite, may be coated also on the inner side of the second paperboard layer 12.

In order to reduce the amount of moisture released from the paper layer into the vacuum chamber during the metallisation process, the first paper layer, which is to be metal vapour deposition coated, may be coated also on the other, outer side by a liquid film composition of a polymer in aqueous or solvent based dispersion or solution, before the metallisation process step. It is desirable to avoid moisture in the vacuum chamber for metallisation, because it may reduce the speed at which the metallisation process can be carried out. Furthermore, any back transfer of paper dust in the subsequent handling of coated paper webs on reels may be prevented.

When employing a liquid film coatable polymer in the barrier coating 14, which has a higher melting temperature than the innermost heat sealable thermoplastic layer, the packaging laminates according to Figures a and b further have the advantage of being heat sealable into packaging containers, by use of the vapour deposition coated metal layer as the induction heat susceptor, thus transferring heat to melt seal the adjacent innermost thermoplastic sealing layer(s).

In Fig. 1 c, there is shown, in cross-section, an alternative embodiment of a packaging laminate 10c for aseptic packaging and long-term storage under ambient conditions, produced according to the invention.

The laminate comprises a first paper layer 11, having a surface weight of about 50 g /m2, laminated to a second paper layer 12, having a surface weight of about 50 g/m2, by an intermediate bonding layer 13, suitably a low density polyethylene such as a normal grade of LDPE, a starch layer or a layer of polyvinylacetate (PVAc).

The intermediate bonding layer 13 is may be alternatively be formed by means of extrusion laminating the coated first paper layer and the second paperboard layer to each other.

A thin barrier layer 14' is formed by liquid film coating of an aqueous polymer composition, and subsequent drying, onto the outer side of the paper layer 11. The composition comprises an aqueous solution of PVOH and 30 weight-% bentonite, and after drying, the coated layer thus comprises PVOH and exfoliated bentonite particles homogeneously distributed in a laminar fashion within the PVOH layer. Preferably, the PVOH has a saponification degree of at least 99 %.

The thin paper web is further pre-coated with a thin metal-receiving lacquer or smoothening layer, in order to be subsequently vapour deposition metallised onto the inner side of the paper, to an optical density (OD) of about 3. The resulting packaging laminate thus comprises a thin paper substrate 11, coated with a barrier layer 14' of PVOH with or without bentonite at a dry grammage of up to about 3 g/m2 on its outer side, and coated with a thin vapour deposition coating layer 15 of aluminium metal at a thickness of about 50 nm on its inner side. Consequently, an alternative thin paper layer having both gas barrier properties from the PVOH layer and water vapour barrier properties from the metallised layer, may be provided.

The outer liquid tight and heat sealable layers 16 and 17 are defined as in Figures 1a and 1b.

In Fig. 1d, there is shown in cross-section an alternative embodiment of a packaging laminate 10d for aseptic packaging and long-term storage under ambient conditions, produced according to the invention.

The laminate comprises a first paper layer 11, having a surface weight of about 50 g /m2, laminated to a second paper layer 12, having a surface weight of about 50 g/m2, by an intermediate bonding layer 13, suitably a low density polyethylene such as a normal grade of LDPE, a starch layer or a layer of polyvinylacetate (PVAc).

The intermediate bonding layer 13 is may be alternatively be formed by means of extrusion laminating the coated first paper layer and the second paperboard layer to each other.

A thin barrier layer 14' is formed by liquid film coating of an aqueous polymer composition, and subsequent drying, onto the outer side of the paper layer 11. The composition comprises an aqueous solution of PVOH and 30 weight-% bentonite, and after drying, the coated layer thus comprises PVOH and exfoliated bentonite particles homogeneously distributed in a laminar fashion within the PVOH layer. Preferably, the PVOH has a saponification degree of at least 99 %.

In comparison to the previously described Example laminates in Fig. 1a-1c, the barrier metal layer 15 is instead vapour deposited onto a polymer substrate film, optionally comprising the innermost layer 16 of heat sealable thermoplastic polymer material, and wherein the metal-deposited film is subsequently laminated to the inner side of the gas-barrier coated paper layer 11 by means of an intermediate bonding layer 18. In case the innermost heat sealable layer 16 is not included in the polymer susbtrate film, it may be extrusion coated onto the inner side of the metal deposited film in a subsequent step.

According to Fig. 1a, 1b, 1c and 1d, the first paper layer 11 may be a very thin paper layer of about 50 g/m2 or even less. Since the paper layer is very thin, the packaging laminate may need an additional light barrier by added pigments in one or more of the layers of the laminate. Suitable such pigments may, for example, be light reflecting white pigments, such as for example titanium dioxide (TiO2), and/or light absorbing pigments, such as for example carbon black, which may be added to the liquid film coated barrier layer 14, 14'.

Alternatively, the pigments may be added in one or more separate liquid film coated layer coated onto the barrier layer 14, 14', before metal vapour deposition coating.

Such pigments are then advantageously hidden towards the inside by the metal vapour deposition coating 15, and by the paper layer 12, towards the outside.

According to one specific embodiment, the intermediate bonding layer is a foamed or cavitated polymer layer or a polymer layer filled with particulate filler, thus introducing some further hiding opportunities to increase stiffness to the sandwich structure and some whitening effect towards the outside of the laminate. Carbon black is coated onto the PVOH-coated first paper layer, in a step before metal vapour deposition coating.

In order to further enhance the white appearance of the laminate towards the outside, white pigments may be added into the intermediate bonding layer 13.

Consequently, the paper sandwich structure enables the creation of excellent light barrier properties in several ways.

The second, outer paper layer preferably has a whiter appearance and may be bleached and/or clay-coated in order to enhance the printed décor, when printed onto the outer surface of the second paper layer.

The laminated material structure, built on two paper layers of which the first, inner paper layer carries the barrier coatings, thus provides flexibility in the choice of materials depending on products to be packaged and provides opportunities to create light barrier properties in the laminate in various smart ways.

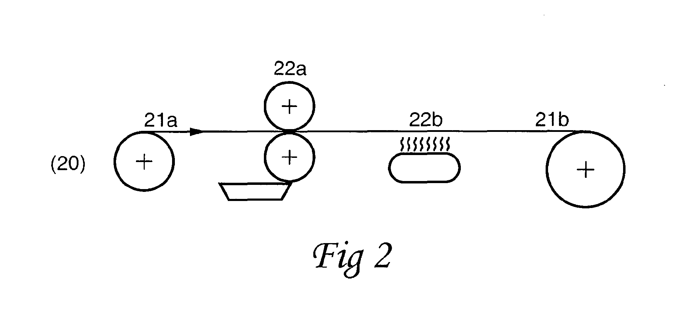

In Fig. 2, the method of liquid film coating of a polymer composition onto a paper or paperboard layer is grammatically shown. The paper layer 21 a is fed from a storage reel towards a liquid film coating station 22a, where the liquid polymer composition is applied at an amount such that the amount of coated and dried layer is about 1-3 g/m2, when the coated paper has passed the drying station 22b. Preferably, the liquid film coating operation is carried out in two steps, i.e. by first coating 0,5-1,5 g/m2, drying in an intermediate step and then coating a second time at 0,5-1,5 glm2 and finally drying the total liquid film coated layer to obtain a coated paper layer 21 b.

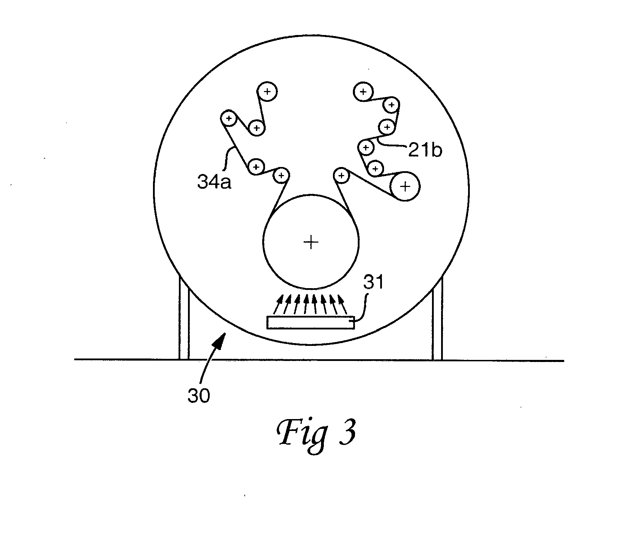

Fig. 3 is a diagrammatic view of an example of a plant for vapour deposition coating of a metal layer 12 onto the coated thin first paper layer produced in Fig. 2. The thin paper web 21 b from Fig. 2 is subjected, on the coating receiving side, to continuous evaporation deposition 30, of a metallised layer of aluminium, possibly in a mixture with aluminium oxide, and the coating is given a thickness of 5-100 nm, preferably 5-50 nm, so that the metal coated paper of the invention 34a is formed. The aluminium vapour comes from a solid piece evaporation source 31.

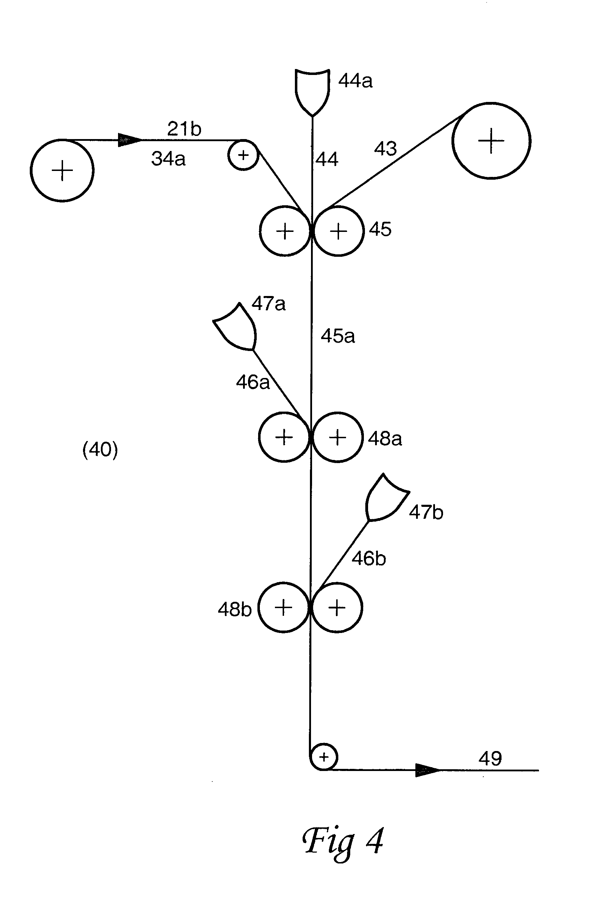

In Fig. 4, the conversion process 40 is shown, wherein the barrier coated first paper layer 21 b, further thin metal vapour deposition coated, 34a, is extrusion laminated to a second paper layer 43, by extruding an intermediate bonding layer of LDPE 44 from an extrusion station 44a and pressing together in a roller nip 45. Subsequently, the thus laminated paper sandwich 45a passes a second extruder 47a and lamination nip 48a, where an innermost heat sealable layer of a heat sealable low density polyethylene composition 46a is coated onto the inner side of the coated first paper layer. In a further extrusion coating station 47b, 48b, an outermost heat sealable layer of preferably LDPE 46b is extrusion coated onto the outer side of the second paper layer 43. Finally, the finished packaging laminate 49 is wound onto a storage reel, not shown.

Alternatively, the outermost heat sealable layer 46b may be pre-coated onto the outside of the second paper layer, before laminating it into the paper sandwich structure 45a.

In an alternative embodiment, not shown in the drawings, the laminated paper sandwich 45a is laminated to a pre-manufactured film of thermoplastic heat sealable polymers 46a in a corresponding extrusion lamination station 47a, 48a.

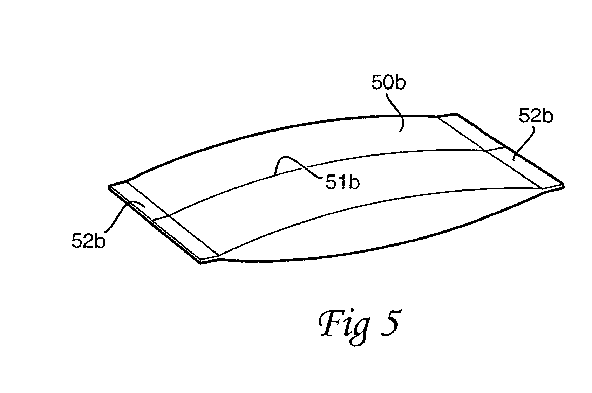

Fig. 5 shows one example of a packaging container 50 produced from the packaging laminate 10 according to the invention. The packaging container is particularly suitable for beverages, sauces, soups or the like. Typically, such a package has a volume of about 100 to 1000 ml. The package has longitudinal and transversal seals 51 and 52, respectively, and optionally an opening device, not shown. Since the packaging laminate is relatively thin by having thinner paper layers, it is not dimensionally stable enough to form a parallellepipedic packaging container, and is not fold formed after transversal sealing 52. It will thus remain a pillow-shaped pouch-like container and distributed and sold like this.

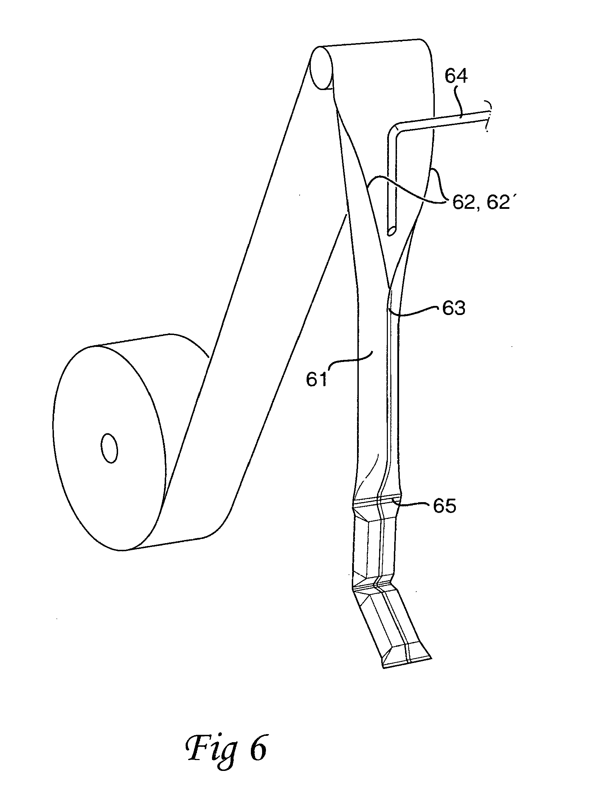

Fig. 6 shows the principle as described in the introduction of the present application, i.e. a web of packaging material is formed into a tube 61 by the longitudinal edges 62, 62' of the web being united to one another in an overlap longitudinal joint 63. The tube is filled 64 with the intended liquid food product and is divided into individual packages by repeated transversal seals 65 of the tube at a pre-determined distance from one another below the level of the filled contents in the tube. The packages are separated by incisions in the transversal seals and are kept at the pillow-shaped geometric configuration by not performing any subsequent fold formation.

The invention is not limited by the embodiments shown and described above, but may be varied within the scope of the claims.

## Claims

1. A non-foil laminated pouch material (10) for packaging of liquid food or beverage, the non-foil laminated pouch material comprising a first layer of paper or other cellulose-based material (11), which first layer is situated towards the inner side of the non-foil laminated pouch material and a second layer of paper or other cellulose-based material (12) situated towards the outer side of the non-foil laminated pouch material, the first and second layers being laminated to each other by means of at least one intermediate bonding layer (13), the non-foil laminated pouch material further comprising a gas barrier coating layer (14, 14'), applied onto one or both sides of the first layer of paper or other cellulose-based material, a metal vapour deposition coating barrier layer (15) arranged on the inner side of the, thus optionally coated, first layer, the non-foil laminated pouch material further comprising an innermost layer of liquid tight, heat sealable thermoplastic polymer material (16) applied onto the inner side of the metal vapour deposition coating (15), and an outermost layer of liquid tight, heat sealable thermoplastic polymer material (17) on the opposite side of the non-foil laminated pouch material, applied on the outer side of the second layer of paper or other cellulose-based material.

2. A non-foil laminated pouch material according to claim 1, **characterised in that** the gas barrier coating layer (14, 14') is formed by liquid film coating of a liquid composition onto said first paper layer and subsequent drying, the liquid composition containing a polymer binder dispersed or dissolved in an aqueous or solvent medium.

3. A non-foil laminated pouch material according to any one of claims 1 or 2, **characterised in that** the gas barrier coating layer (14) is coated onto the inner side of the first paper layer and **in that** the metal vapour deposition coating barrier layer (15) is deposited onto the inner side of said gas barrier coating.

4. A non-foil laminated pouch material according to claim 3, **characterised in that** it additionally has a gas barrier coating layer (14') on the outer side of the first paper layer.

5. A non-foil laminated pouch material according to any one of claims 1 or 2, **characterised in that** the metal vapour deposition coating barrier layer (15) was deposited onto a polymer substrate film (16) comprising a heat sealable thermoplastic material, and **in that** said deposition coated film was subsequently laminated to the gas barrier coated first paper layer by means of an additional intermediate bonding layer (18).

6. A non-foil laminated pouch material according to any one of the preceding claims, **characterised in that** the gas barrier coating layer (14) is formed from a composition mainly comprising a polymer selected from the group consisting of polyvinyl alcohol (PVOH), water dispersible ethylene vinyl alcohol (EVOH), water dispersible polyamide (PA), polyvinylidene chloride (PVDC), cellulose derivatives, polysaccharides, polysaccharide derivatives and combinations of two or more thereof.

7. A non-foil laminated pouch material according to claim 2, **characterised in that** said liquid composition further comprises inorganic particles.

8. A non-foil laminated pouch material according to any one of the preceding claims, **characterised in that** said gas barrier coating layer (14) is applied at a total amount of from 0,5 to 7 g/m².

9. A non-foil laminated pouch material according to any one of the preceding claims, **characterised in that** the metal vapour deposition coating layer (15) is a layer mainly comprising aluminium metal with an optical density (OD) of from 1 to 5.

10. A non-foil laminated pouch material according to any one of the preceding claims, **characterised in that** one or more layers comprising pigments, creating a barrier towards light, are coated onto the inner side of the first paper layer and **in that** a metal vapour deposition coating barrier layer (15) is subsequently deposited onto the inner side of said light barrier coating layer.

11. A non-foil laminated pouch material according to any one of the preceding claims, **characterised in that** the first, innermost situated, layer of paper or other cellulose-based material (11) has a surface weight of from 20 to 100 g / m2.

12. A non-foil laminated pouch material according to any one of the preceding claims, **characterised in that** the second, outermost situated, layer of paper or other cellulose-based material (12) has a surface weight of from 20 to 100 g / m2.

13. A non-foil laminated pouch material according to any one of the preceding claims, **characterised in that** the first, inner, paper layer is an unbleached paper and **in that** the second, outer, paper layer has a whiter appearance than the first paper layer and is suitable for printing of an outside décor layer.

14. A non-foil laminated pouch material according to any one of the preceding claims, **characterised in that** the intermediate bonding layer (13) is a layer of a foamed, cavitated or filled thermoplastic polymer.

15. Method of manufacturing a non-foil laminated pouch material (10) according to any one of claims 1-14, comprising the steps of
- providing a first layer of paper or other cellulose-based material (11),
- coating a gas barrier layer (14) onto the inner side of the paper or other cellulose-based material layer,
- vapour depositing a barrier metal layer (15) onto the inner side of the thus coated paper layer,
- providing an innermost layer (16) of a heat sealable thermoplastic polymer material,
- laminating the innermost layer (16) to the inner side of the metal coated paper layer by extrusion coating, or by laminating the innermost layer (16) to the paper layer in the form a pre-manufactured film,
- providing a second paper layer (12) on the outside of the first paper layer,
- laminating the outer side of the first, coated, layer of paper to the second paper layer, and at any stage of the method,
- providing an outermost layer (17) of a heat sealable thermoplastic polymer material on the outermost, opposite side, of the non-foil laminated pouch material (10).

16. Method of manufacturing a non-foil laminated pouch material (10) according to claim 15, wherein the barrier metal layer (15) is instead vapour deposited onto a polymer substrate film comprising an innermost layer (16) of heat sealable thermoplastic polymer material and wherein the metal-deposited film is subsequently laminated to the inner side of the gas-barrier coated paper layer (11) by means of an intermediate bonding layer (18).

17. Method of manufacturing a non-foil laminated pouch material (10) according to any one of claims 15 or 16, in preparing said gas barrier coating, further comprising the steps of
- providing a liquid composition containing a polymer binder dispersed or dissolved in an aqueous or solvent-based liquid medium,
- forming a thin gas barrier layer contiguous to the inner side of the first paper layer, comprising said polymer binder, by coating (22a) the liquid composition onto the inner side of said layer of paper and subsequently drying (22b) to evaporate the liquid.

18. Method according to claim 17, wherein the oxygen gas barrier polymer contained in the liquid composition is selected from a group consisting of polyvinyl alcohol (PVOH), water dispersible ethylene vinyl alcohol (EVOH), water dispersible polyamide (PA), polyvinylidene chloride (PVDC), cellulose derivatives, polysaccharides, polysaccharide derivatives and combinations of two or more thereof.

19. Packaging container (50a; 50b) manufactured from the non-foil laminated pouch material (10a; 10b) as specified in any one of claims 1-14.

## Patentansprüche

1. Folienfreies laminiertes Beutelmaterial (10) zum Verpacken von flüssigen Lebensmitteln oder Getränken, wobei das folienfreie laminierte Beutelmaterial eine erste Schicht aus Papier oder einem anderen cellulosebasierten Material (11) umfasst, welche erste Schicht in Richtung auf die Innenseite des folienfreien laminierten Beutelmaterials angeordnet ist, und eine zweite Schicht aus Papier oder einem anderen cellulosebasierten Material (12), die in Richtung auf die Außenseite des folienfreien laminierten Beutelmaterials angeordnet ist, wobei die erste und die zweite Schicht mithilfe wenigstens einer Binde-Zwischenschicht (13) aneinander laminiert sind, wobei das folienfreie laminierte Beutelmaterial ferner eine Gasbarriereschicht (14, 14') umfasst, die auf eine oder beide Seiten der ersten Schicht aus Papier oder einem anderen cellulosebasierten Material aufgebracht ist, eine metallaufgedampfte Barriereschicht (15), die an der Innenseite der, somit gegebenenfalls beschichteten, ersten Schicht angeordnet ist, wobei das folienfreie laminierte Beutelmaterial ferner eine innerste Schicht aus flüssigkeitsfestem, heißsiegelfähigem thermoplastischen Polymermaterial (16) umfasst, die auf die Innenseite der metallaufgedampften Schicht (15) aufgebracht ist, und eine äußerste Schicht aus flüssigkeitsfestem, heißsiegelfähigem thermoplastischen Polymermaterial (17) auf der gegenüber liegenden Seite des folienfreien laminierten Beutelmaterials, aufgebracht auf der Außenseite der zweiten Schicht aus Papier oder einem anderen cellulosebasierten Material.

2. Folienfreies laminiertes Beutelmaterial gemäß Anspruch 1, **dadurch gekennzeichnet, dass** die Gasbarriereschicht (14, 14') durch Flüssigfilmbeschichten einer flüssigen Zusammensetzung auf die erste Papierschicht und anschließendes Trocknen gebildet ist, wobei die flüssige Zusammensetzung ein Polymerbindemittel enthält, das in einem wässrigen oder Lösungsmittelmedium dispergiert oder gelöst ist.

3. Folienfreies laminiertes Beutelmaterial gemäß einem der Ansprüche 1 oder 2, **dadurch gekennzeichnet, dass** die Gasbarriereschicht (14) auf die Innenseite der ersten Papierschicht geschichtet ist und dass die metallaufgedampfte Barriereschicht (15) auf der Innenseite der Gasbarriereschicht abgeschieden ist.

4. Folienfreies laminiertes Beutelmaterial gemäß Anspruch 3, **dadurch gekennzeichnet, dass** es zusätzlich eine Gasbarriereschicht (14') auf der Außenseite der ersten Papierschicht aufweist.

5. Folienfreies laminiertes Beutelmaterial gemäß einem der Ansprüche 1 oder 2, **dadurch gekennzeichnet, dass** die metallaufgedampfte Barriereschicht (15) auf einen Polymersubstratfilm (16) abgeschieden worden ist, der ein heißsiegelfähiges thermoplastisches Material umfasst, und dass der abscheidungsbeschichtete Film anschließend mithilfe einer zusätzlichen Binde-Zwischenschicht (18) auf die Gasbarrierebeschichtete erste Papierschicht laminiert worden ist.

6. Folienfreies laminiertes Beutelmaterial gemäß einem der vorstehenden Ansprüche, **dadurch gekennzeichnet, dass** die Gasbarriereschicht (14) aus einer Zusammensetzung gebildet ist, die hauptsächlich ein Polymer umfasst, das ausgewählt ist aus der Gruppe bestehend aus Polyvinylalkohol (PVOH), wasserdispergierbarem Ethylenvinylalkohol (EVOH), wasserdispergierbarem Polyamid (PA), Polyvinylidenchlorid (PVDC), Cellulosederivaten, Polysacchariden, Polysaccharidderivaten und Kombinationen von zwei oder mehreren davon.

7. Folienfreies laminiertes Beutelmaterial gemäß Anspruch 2, **dadurch gekennzeichnet, dass** die flüssige Zusammensetzung ferner anorganische Partikel umfasst.

8. Folienfreies laminiertes Beutelmaterial gemäß einem der vorstehenden Ansprüche, **dadurch gekennzeichnet, dass** die Gasbarriereschicht (14) in einer Gesamtmenge von 0,5 bis 7 g/m² aufgebracht ist.

9. Folienfreies laminiertes Beutelmaterial gemäß einem der vorstehenden Ansprüche, **dadurch gekennzeichnet, dass** die metallaufgedampfte Schicht (15) eine Schicht ist, die hauptsächlich Aluminiummetall mit einer optischen Dichte (OD) von 1 bis 5 umfasst.

10. Folienfreies laminiertes Beutelmaterial gemäß einem der vorstehenden Ansprüche, **dadurch gekennzeichnet, dass** eine oder mehrere Schichten, die Pigmente umfassen, um eine Barriere gegen Licht zu erzeugen, auf die Innenseite der ersten Papierschicht geschichtet sind und dass anschließend eine metallaufgedampfte Barriereschicht (15) auf die Innenseite der Lichtbarriereschicht abgeschieden ist.

11. Folienfreies laminiertes Beutelmaterial gemäß einem der vorstehenden Ansprüche, **dadurch gekennzeichnet, dass** die erste, innen angeordnete Schicht aus Papier oder einem anderen cellulosebasierten Material (11) ein Flächengewicht von 20 bis 100 g/m² aufweist.

12. Folienfreies laminiertes Beutelmaterial gemäß einem der vorstehenden Ansprüche, **dadurch gekennzeichnet, dass** die zweite, außen angeordnete Schicht aus Papier oder einem anderen cellulosebasierten Material (12) ein Flächengewicht von 20 bis 100 g/m² aufweist.

13. Folienfreies laminiertes Beutelmaterial gemäß einem der vorstehenden Ansprüche, **dadurch gekennzeichnet, dass** die erste, innere Papierschicht ein nichtgebleichtes Papier ist und dass die zweite, äußere Papierschicht ein weißeres Aussehen als die erste Papierschicht aufweist und zum Drucken einer äußeren Dekorschicht geeignet ist.

14. Folienfreies laminiertes Beutelmaterial gemäß einem der vorstehenden Ansprüche, **dadurch gekennzeichnet, dass** die Binde-Zwischenschicht (13) eine Schicht aus einem geschäumten, kavitierten oder gefüllten thermoplastischen Polymer ist.

15. Verfahren zum Herstellen eines folienfreien laminierten Beutelmaterials (10) gemäß einem der Ansprüche 1-14, umfassend die Schritte
- Bereitstellen einer ersten Schicht aus Papier oder einem anderen cellulosebasierten Material (11),
- Aufschichten einer Gasbarriereschicht (14) auf die Innenseite der Schicht aus Papier oder einem anderen cellulosebasierten Material,
- Aufdampfen einer Barriere-Metallschicht (15) auf die Innenseite der so beschichteten Papierschicht,
- Bereitstellen einer innersten Schicht (16) aus einem heißsiegelfähigen thermoplastischen Polymermaterial,
- Laminieren der innersten Schicht (16) auf die Innenseite der metallbeschichteten Papierschicht durch Extrusionsbeschichten oder durch Laminieren der innersten Schicht (16) auf die Papierschicht in der Form eines vorgefertigten Films,
- Bereitstellen einer zweiten Papierschicht (12) auf der Außenseite der ersten Papierschicht,
- Laminieren der Außenseite der ersten, beschichteten Papierschicht auf die zweite Papierschicht, und bei jeder Stufe des Verfahrens
- Bereitstellen einer äußersten Schicht (17) aus einem heißsiegelfähigen thermoplastischen Polymermaterial auf die äußerste, gegenüberliegende Seite des folienfreien laminierten Beutelmaterials (10).

16. Verfahren zum Herstellen eines folienfreien laminierten Beutelmaterials (10) gemäß Anspruch 15, wobei die Barriere-Metallschicht (15) stattdessen auf einen Polymersubstratfilm aufgedampft ist, der eine innerste Schicht (16) aus heißsiegelfähigem thermoplastischem Polymermaterial umfasst und wobei der metallabgeschiedene Film anschießend mithilfe einer Binde-Zwischenschicht (18) auf die Innenseite der Gasbarriere-beschichteten Papierschicht (11) laminiert wird.

17. Verfahren zum Herstellen eines folienfreien laminierten Beutelmaterials (10) gemäß einem der Ansprüche 15 oder 16 bei der Herstellung der Gasbarriereschicht, ferner umfassend die Schritte
- Bereitstellen einer flüssigen Zusammensetzung, die ein in einem wässrigen oder Lösungsmittel-basierten flüssigen Medium dispergiertes oder gelöstes Polymerbindemittel enthält,
- Bilden einer dünnen Gasbarriereschicht angrenzend an die Innenseite der ersten Papierschicht, umfassend das Polymerbindemittel, durch Aufschichten (22a) der flüssigen Zusammensetzung auf die Innenseite der Papierschicht und anschließendes Trocknen (22b) zum Abdampfen der Flüssigkeit.

18. Verfahren gemäß Anspruch 17, wobei das Sauerstoffgas-Barrierepolymer, das in der flüssigen Zusammensetzung enthalten ist, ausgewählt ist aus der Gruppe bestehend aus Polyvinylalkohol (PVOH), wasserdispergierbarem Ethylenvinylalkohol (EVOH), wasserdispergierbarem Polyamid (PA), Polyvinylidenchlorid (PVDC), Cellulosederivaten, Polysacchariden, Polysaccharidderivaten und Kombinationen von zwei oder mehreren davon.

19. Verpackungsbehälter (50a; 50b), hergestellt aus dem folienfreien laminierten Beutelmaterial (10a; 10b) gemäß einem der Ansprüche 1-14.

## Revendications

1. Matériau multicouche sans feuille métallique pour sachet (10) destiné à l'emballage d'un aliment liquide ou d'une boisson, le matériau multicouche sans feuille métallique pour sachet comprenant une première couche de papier ou d'un autre matériau à base de cellulose (11), ladite première couche étant située vers le côté interne du matériau multicouche sans feuille métallique pour sachet, et une deuxième couche de papier ou d'un autre matériau à base de cellulose (12) située vers le côté externe du matériau multicouche sans feuille métallique pour sachet, les première et deuxième couches étant appliquées par stratification l'une sur l'autre au moyen d'au moins une couche de liage intermédiaire (13), le matériau multicouche sans feuille métallique pour sachet comprenant en outre une couche de revêtement formant une barrière contre le passage de gaz (14, 14'), appliquée sur un côté ou sur les deux côtés de la première couche de papier ou d'un autre matériau à base de cellulose, une couche barrière de revêtement formée par dépôt de métal en phase vapeur (15) disposée sur le côté interne de la première couche, ainsi pourvue d'un revêtement optionnel, le matériau multicouche sans feuille métallique pour sachet comprenant en outre une couche située tout à l'intérieur constituée de matériau polymère thermoplastique étanche aux liquides, thermoscellable (16), appliquée sur le côté interne du revêtement formé par dépôt de métal en phase vapeur (15), et une couche située tout à l'extérieur constituée de matériau polymère thermoplastique étanche aux liquides, thermoscellable (17) sur le côté opposé du matériau multicouche sans feuille métallique pour sachet, appliquée sur le côté externe de la deuxième couche de papier ou d'un autre matériau à base de cellulose.

2. Matériau multicouche sans feuille métallique pour sachet selon la revendication 1, **caractérisé en ce que** la couche de revêtement formant une barrière contre le passage de gaz (14, 14') est formée par application d'une composition liquide sous forme de film liquide sur ladite première couche de papier, cette opération étant suivie d'un séchage, la composition liquide contenant un liant polymère dispersé ou dissous dans un milieu aqueux ou solvant.

3. Matériau multicouche sans feuille métallique pour sachet selon l'une quelconque des revendications 1 ou 2, **caractérisé en ce que** la couche de revêtement formant une barrière contre le passage de gaz (14) est appliquée sur le côté interne de la première couche de papier et **en ce que** la couche barrière de revêtement formée par dépôt de métal en phase vapeur (15) est déposée sur le côté interne dudit revêtement formant une barrière contre le passage de gaz.

4. Matériau multicouche sans feuille métallique pour sachet selon la revendication 3, **caractérisé en ce qu'**il comporte en outre une couche de revêtement formant une barrière contre le passage de gaz (14') sur le côté externe de la première couche de papier.

5. Matériau multicouche sans feuille métallique pour sachet selon l'une quelconque des revendications 1 ou 2, **caractérisé en ce que** la couche barrière de revêtement formée par dépôt de métal en phase vapeur (15) a été déposée sur un substrat sous forme de film polymère (16) comprenant un matériau thermoplastique thermoscellable, et **en ce que** ledit film revêtu par dépôt a ensuite été appliqué par stratification sur la première couche de papier portant le revêtement formant une barrière contre le passage de gaz au moyen d'une couche de liage intermédiaire additionnelle (18).

6. Matériau multicouche sans feuille métallique pour sachet selon l'une quelconque des revendications précédentes, **caractérisé en ce que** la couche de revêtement formant une barrière contre le passage de gaz (14) est formée d'une composition comprenant essentiellement un polymère sélectionné dans le groupe constitué de l'alcool polyvinylique (PVOH), de l'éthylène-alcool vinylique (EVOH) dispersible dans l'eau, d'un polyamide (PA) dispersible dans l'eau, du chlorure de polyvinylidène (PVDC), de dérivés de cellulose, de polysaccharides, de dérivés de polysaccharides, et de combinaisons de deux de ceux-ci ou plus.

7. Matériau multicouche sans feuille métallique pour sachet selon la revendication 2, **caractérisé en ce que** ladite composition liquide comprend en outre des particules inorganiques.

8. Matériau multicouche sans feuille métallique pour sachet selon l'une quelconque des revendications précédentes, **caractérisé en ce que** ladite couche de revêtement formant une barrière contre le passage de gaz (14) est appliquée dans une quantité totale de 0,5 g/m² à 7 g/m².

9. Matériau multicouche sans feuille métallique pour sachet selon l'une quelconque des revendications précédentes, **caractérisé en ce que** la couche de revêtement formée par dépôt de métal en phase vapeur (15) est une couche comprenant essentiellement de l'aluminium métallique ayant une densité optique (DO) de 1 à 5.

10. Matériau multicouche sans feuille métallique pour sachet selon l'une quelconque des revendications précédentes, **caractérisé en ce qu'**une ou plusieurs couches comprenant des pigments, formant une barrière contre le passage de la lumière, sont appliquées sur le côté interne de la première couche de papier et **en ce qu'**une couche barrière de revêtement formée par dépôt de métal en phase vapeur (15) est ensuite déposée sur le côté interne de ladite couche de revêtement formant une barrière contre le passage de la lumière.

11. Matériau multicouche sans feuille métallique pour sachet selon l'une quelconque des revendications précédentes, **caractérisé en ce que** la première couche de papier, située tout à l'intérieur (11), a un poids superficiel de 20 g/m² à 100 g/m².

12. Matériau multicouche sans feuille métallique pour sachet selon l'une quelconque des revendications précédentes, **caractérisé en ce que** la deuxième couche de papier, située tout à l'extérieur (12), a un poids superficiel de 20 g/m² à 100 g/m².

13. Matériau multicouche sans feuille métallique pour sachet selon l'une quelconque des revendications précédentes, **caractérisé en ce que** la première couche de papier interne est constituée de papier écru et **en ce que** la deuxième couche de papier externe a une apparence plus blanche que la première couche de papier et convient pour l'impression d'une couche décorative extérieure.

14. Matériau multicouche sans feuille métallique pour sachet selon l'une quelconque des revendications précédentes, **caractérisé en ce que** la couche de liage intermédiaire (13) est une couche d'un polymère thermoplastique transformé en mousse, pourvu de cavités, ou pourvu d'une charge.

15. Procédé de fabrication d'un matériau multicouche sans feuille métallique pour sachet (10) selon l'une quelconque des revendications 1 à 14, comprenant les étapes qui consistent à :
- fournir une première couche de papier ou d'un autre matériau à base de cellulose (11),
- appliquer une couche formant une barrière contre le passage de gaz (14) sur le côté interne de la couche de papier ou d'un autre matériau à base de cellulose,
- appliquer par dépôt en phase vapeur une couche barrière métallique (15) sur le côté interne de la couche de papier ainsi revêtue,
- fournir une couche située tout à l'intérieur (16) constituée d'un matériau polymère thermoplastique thermoscellable,
- appliquer par stratification la couche située tout à l'intérieur (16) sur le côté interne de la couche de papier métallisée en utilisant un procédé de revêtement par extrusion, ou en appliquant par stratification la couche située tout à l'intérieur (16) sur la couche de papier sous la forme d'un film préfabriqué,
- disposer une deuxième couche de papier (12) sur l'extérieur de la première couche de papier,
- appliquer par stratification le côté externe de la première couche de papier, revêtue, sur la deuxième couche de papier, et à toute étape du procédé,
- disposer une couche située tout à l'extérieur (17) constituée d'un matériau polymère thermoplastique thermoscellable sur le côté opposé, situé tout à l'extérieur, du matériau multicouche sans feuille métallique pour sachet (10).

16. Procédé de fabrication d'un matériau multicouche sans feuille métallique pour sachet (10) selon la revendication 15, dans lequel la couche barrière métallique (15) est au lieu appliquée par dépôt en phase vapeur sur un substrat sous forme de film polymère comprenant une couche située tout à l'intérieur (16) constituée d'un matériau polymère thermoplastique thermoscellable et dans lequel le film portant le dépôt métallique est ensuite appliqué par stratification sur le côté interne de la couche de papier portant le revêtement formant une barrière contre le passage de gaz (11) au moyen d'une couche de liage intermédiaire (18).

17. Procédé de fabrication d'un matériau multicouche sans feuille métallique pour sachet (10) selon l'une quelconque des revendications 15 ou 16, en préparant ledit revêtement formant une barrière contre le passage de gaz, les étapes qui consistent à :
- fournir une composition liquide contenant un liant polymère dispersé ou dissous dans un milieu liquide aqueux ou à base de solvant,
- former une couche mince formant une barrière contre le passage de gaz contiguë au côté interne de la première couche de papier, comprenant ledit liant polymère, en appliquant (22a) la composition liquide sur le côté interne de ladite couche de papier, cette opération étant suivie d'un séchage (22b) pour faire évaporer le liquide.

18. Procédé selon la revendication 17, dans lequel le polymère destiné à former une barrière contre le passage d'oxygène gazeux contenu dans la composition liquide est sélectionné dans un groupe constitué de l'alcool polyvinylique (PVOH), de l'éthylène-alcool vinylique (EVOH) dispersible dans l'eau, d'un polyamide (PA) dispersible dans l'eau, du chlorure de polyvinylidène (PVDC), de dérivés de cellulose, de polysaccharides, de dérivés de polysaccharides, et de combinaisons de deux de ceux-ci ou plus.

19. Contenant d'emballage (50a ; 50b) fabriqué à partir du matériau multicouche sans feuille métallique pour sachet (10a ; 10b) selon l'une quelconque des revendications 1 à 14.
